Europäisches Patentamt

European Patent Office

Office européen des brevets

(19)

(11) Veröffentlichungsnummer: **0 097 957**
**A1**

(12) **EUROPÄISCHE PATENTANMELDUNG**

(21) Anmeldenummer: 83106290.6

(22) Anmeldetag: 28.06.83

(51) Int. Cl.³: **D 06 C 21/00**
**D 06 B 1/16, D 06 B 19/00**
**B 05 D 1/28**

(30) Priorität: 30.06.82 AT 2545/82

(43) Veröffentlichungstag der Anmeldung:
**11.01.84  Patentblatt  84/2**

(84) Benannte Vertragsstaaten:
**AT BE CH DE FR GB IT LI LU NL SE**

(71) Anmelder: **Sinter Limited**
**15 Pembroke Road**
**Bristol BS99 7DX(GB)**

(72) Erfinder: **Commarmot, Alfons**
**Tübacher Strasse 45**
**CH-9403 Goldach(CH)**

(74) Vertreter: **Wuesthoff, Franz, Dr.-Ing. et al,**
**Patentanwälte Wuesthoff -v. Pechmann-Behrens-Goetz**
**Schweigerstrasse 2**
**D-8000 München 90(DE)**

(54) Verfahren und Vorrichtung zur Herstellung von kunststoffbeschichteten bahnförmigen Unterlagen.

(57) Ein Verfahren und eine Vorrichtung zur Herstellung von kunststoffbeschichteten Unterlagen durch Auftragen eines Kunststoffs mittels einer mustermässig angeordnete Vertiefungen aufweisenden Förderfläche auf eine erhitzte Unterlage (2) nach dem Tiefdruckverfahren mit einer Einrichtung zum Aufbringen des Kunstharzpulvers auf die Förderfläche, die eine Temperatur aufweist, bei der die Rieselfähigkeit des Pulvers noch erhalten bleibt, so dass ein Ankleben an der Förderfläche verhindert wird, während eine mittels heizbarer Walzen (18,20) an die Förderfläche angepresste und beheizte Unterlage (2) auf einer Temperatur gehalten wird, die zum Erweichen und Verkleben des Kunstharzpulvers mit der Unterlage (2) führt, worauf die so beschichtete Unterlage (2) nach Abnahme von der Förderfläche vor ihrer Abkühlung oder gegebenenfalls nach Wiedererwärmung zwischen einer umlaufenden heizbaren Anpresswalze (27) und einer ihre Bewegung um die Anpresswalze (27) hemmenden Führung so hindurchgeführt wird, dass ein Verdichten und Schrumpfen der beschichteten Unterlage (2) erfolgt.

FIG.1

PATENTANWÄLTE

WUESTHOFF - v. PECHMANN - BEHRENS - GOETZ

EUROPEAN PATENT ATTORNEYS

DR.-ING. FRANZ WUESTHOFF
DR. PHIL. FRED...0097957...-1956)
DIPL.-ING. GERHARD PULS (1952-1971)
DIPL.-CHEM. DR. E. FREIHERR VON PECHMANN
DR.-ING. DIETER BEHRENS
DIPL.-ING.; DIPL.-WIRTSCH.-ING. RUPERT GOETZ

EP-57 255

Sinter Limited
Bristol, England

D-8000 MÜNCHEN 90
SCHWEIGERSTRASSE 2

TELEFON: (089) 66 20 51
TELEGRAMM: PROTECTPATENT
TELEX: 5 24 070

B e s c h r e i b u n g

Verfahren und Vorrichtung zur Herstellung von kunststoffbeschichteten bahnförmigen Unterlagen

Bahnförmige Unterlagen, wie Textilgewebe, die als Einlagestoffe, z.B. als Krageneinlagestoffe für Hemden, in der
Bekleidungsindustrie Verwendung finden, werden mit einem
thermoplastischen Kunstharz mustermäßig, z.B. punktförmig,
so belegt, daß dann dieses als heißsiegelfähiges Haftmittel
für die Verbindung mit anderen Stoffbahnen dienen kann.
Derartige Verfahren, bei denen das Kunstharz in Pulverform
auf die Unterlagen aufgebracht und unter Erwärmen fixiert
wird, sind in den Patentschriften GB-PS 745 057 sowie US-PS
3 085 548 und FR-PS 1 198 436 beschrieben.

Bei einem hierfür besonders geeigneten Verfahren wird das
Kunstharzpulver mittels einer Auftragswalze, die eine reliefartige Oberflächenstruktur mit Vertiefungen besitzt, unter
Wärmeeinwirkung so belegt, daß das Kunstharz mustermäßig
fest auf der Unterlage haftet. Hierbei wird die bahnförmige
Unterlage aber einer gleichzeitigen starken Beanspruchung
durch Zug und Hitze unterworfen, was zu einer latenten
Dehnung dieser Unterlage führt. Wenn dann eine erneute Erwärmung eintritt oder die Unterlage einem Waschvorgang unterworfen wird, gleicht sich die innere Spannung aus und es
tritt ein Schrumpfen der gedehnten Unterlage ein. Dies ist
besonders dann sehr störend, wenn die betreffende Unterlage als Einlagestoff bereits mittels des aufgetragenen Kunstharzes an andere Stoffbahnen durch Heißsiegeln fixiert worden ist, weil bei den so miteinander verbundenen Stoffen dann der mit dem Kunstharz belegte Stoff ein anderes Wasch- und Thermoschrumpfverhalten zeigt als der meist gleichartige, jedoch nicht belegte und daher nicht gedehnte Stoff. Insbesondere dann, wenn die Unterlagen als Einlagestoffe in Hemden verwendet werden, führt dieses unterschiedliche Verhalten der Stoffbahnen zu Faltenbildungen bei den Kragen und Manchetten der Hemden, die mit dem Einlagestoff versehen sind.

Das bekannte Sanfor-Verfahren, das zwecks Verhindern des späteren Einlaufens und Schrumpfens bei gestreckten Textilien durchgeführt wird und das man im allgemeinen auch bei den Unterlagen schon vor dem Belegen mit dem Kunstharz anwendet, ist kostspielig und führt bei den bereits mit Kunstharz belegten Geweben nicht zum gewünschten Ziel, da dieser Schrumpfvorgang durch Sanforisieren an den durch das Kunstharz beschichteten Stellen behindert wird und auch der Kunstharzauftrag hierbei ein anderes Verhalten zeigt als die textile Unterlage.

Der Erfindung liegt nun die Aufgabe zugrunde, derartige mit Kunstharz belegte heißsiegelfähige bahnförmige Unterlagen herzustellen, die bei einem späteren Erhitzungs- oder Waschvorgang nicht oder nicht mehr wesentlich schrumpfen und eingehen.

Gelöst wird nun diese Aufgabe dadurch, daß auf die bahnförmige Unterlage nach dem Tiefdruckverfahren das Kunstharz in Pulverform mit Hilfe einer mit mustermäßigen Vertiefungen versehene Förderfläche, insbesondere einer Auftragswalze, z.B. Punktwalze, bei einer Temperatur aufgebracht wird, bei welcher noch die volle Rieselfähigkeit des Pulvers erhalten und ein Ankleben an der Förderfläche vermieden wird. Hierbei wird die zu beschichtende Unterlage, die auf eine Temperatur erhitzt ist, bei der das Kunstharz erweicht und klebrig wird, mit der Förderfläche in Kontakt gebracht, wodurch die Übertragung des Kunstharzpulvers aus den Vertiefungen auf die Unterlage erfolgt. Durch Führen der Unterlage zwischen Kalanderwalzen wird im allgemeinen der übertragene Kunststoffauftrag dann abgeflacht und noch fester mit der Unterlage verbunden. Die mit dem Kunstharz belegte Unterlage wird sodann vor ihrer Abkühlung oder gegebenenfalls nach ihrer Wiedererwärmung zwischen einer umlaufenden Walze und einer ihre Bewegung um die Walze herum hemmenden Führung im erwärmten Zustand so hindurchgeführt, daß ein Verdichten und Schrumpfen der Unterlage und des Kunststoffauftrags eintritt. Vorzugsweise besitzt die umlaufende Anpreßwalze an der Oberfläche eine Riffelung um das Durchrutschen der Walze zu verhindern. Die hemmende Führung wirkt als ein Brems- oder Hemmschuh und soll an ihrer Berührungsfläche mit der Unterlage eine Kautschuk- oder Gummiauflage aufweisen.

Durch dieses kombinierte Verfahren des Auftragens des Kunstharzes und des Verdichtens der Unterlage wird bei größerer Arbeitsgeschwindigkeit mit geringem Energieaufwand ein präziser Auftrag des Kunstharzes erreicht, wobei das Muster des Auftrages und die Auftragsmenge nicht nur genau gesteuert werden können, sondern man gleichzeitig auch erreicht, daß das Wasch- und Thermoschrumpfverhalten der belegten Unterlage günstig beeinflußt wird.

Ein weiterer Vorteil des Verfahrens liegt darin, daß man es in der Hand hat, die für die Durchführung des Verfahrens in Betracht kommenden Temperaturbereiche in Abhängigkeit von den Eigenschaften der jeweils zu verarbeitenden Kunstharze auf jeweils günstige Werte präzis einstellen zu können. Dabei wird gegebenenfalls im Aufbringebereich des Pulvers auf die Förderfläche durch eine Kühlung der Förderfläche deren Temperatur auf Werten gehalten, die unterhalb der Erweichungstemperatur bzw. Plastifizierungstemperatur liegen.

**0097957**

Zur Einstellung der höheren Temperaturen der Unterlage im Übertragungsbereich eignet sich besonders die Übertragung der Wärme mittels erhitzer Walzen durch die Unterlage hindurch; jedoch sind hierfür auch Wärmestrahler brauchbar, um die Unterlage in diesem Bereich auf die gewünschte Temperatur zu bringen, bei der Kunststoff erweicht und klebrig wird. Dadurch werden die der Unterlage zugewandten Teilchen des in die Vertiefungen der Förderfläche eingebrachten Kunststoffpulvers klebrig, während die in den Vertiefungen der Förderfläche befindlichen Pulverteilchen eine Temperatur aufweisen, bei der ein Ankleben des Kunststoffes an der Förderfläche vermieden wird.

Dank der Klebrigkeit der der Unterlage zugewandten Oberflächenteilbereiche des locker, durch Rakeleinrichtungen auf die Förderfläche aufgebrachten Kunstharzpulvers erfolgt ein präziser Übergang des in den Vertiefungen der Strukturnestern der Förderfläche vorhandenen Pulvers auf die erhitzte Unterlage. Da die Haftung durch Plastifizierung des Kunstharzpulvers bei Berührung mit der Unterlage dank deren höheren Temperatur beginnt, kann sich die Lage des Kunststoffpulvers im Verhältnis zur Unterlage nach deren Ablösung von der Förderfläche nicht mehr verändern. Durch weitere Beheizung, z.B. mit erhitzten Walzen oder durch Strahlungswärme, wird im allgemeinen eine ergänzende Nachplastifizierung und Sinterung des Pulverauftrags erreicht, wobei auch durch Kalanderwalzen der Kunstharzauftrag abgeflacht und noch fester mit der Unterlage verbunden werden kann.

Durch die erfindungsgemäße Führung der Unterlage zwischen einer umlaufenden Walze und einer die Bewegung der Unterlage um die Walze herum hemmenden Führung wird erreicht, daß die Unterlage vor dem Erstarren des Kunstharzauftrags sich von der durch mechanische und wärmemäßige Beanspruchung verursachten Dehnung erholen und relaxieren kann mit der Wirkung, daß das Wasch- und Thermoschrumpfverhalten der so beschichteten Unterlage deutlich verbessert ist.

Da beim Verdichten und Schrumpfen der gedehnten Unterlage durch die Führung der Unterlage zwischen umlaufender Anpreßwalze und der hemmenden Führung auch der Kunststoffauftrag fester mit der Unterlage verbunden wird, erübrigt sich dadurch gegebenenfalls die Anwendung einer eigenen Kalanderwalze zum Aufpressen des von der Förderfläche übernommenen Kunststoffauftrags auf die Unterlage.

Das Prinzip des mechanischen Verdichtens und Schrumpfens von Papier- und auch Textilbahnen ist seit längerem bekannt. So sind in der DE-PS 22 38 230 und der DE-OS 30 02 337 Vorrichtungen beschrieben, bei denen die Papier- oder Textilbahn zwischen einer Anpreßwalze und einem endlosen elastischen Band geführt wird, wobei die Umfangsgeschwindigkeiten der Anpreßwalze und des elastischen Bandes verschieden sind. Auch werden Maschinen der Firma Hunt and Moscrop (Textile Machinery) Ltd., Middleton, Manchester, UK, die nach diesem Prinzip arbeiten, seit langem bei der Textilausrüstung verwendet, ebenso wie die seit langem bekannten Rigmel-Maschinen, bei denen das Tuch zwischen dem über Rollen laufenden Endlosband aus Kautschuk und einer erhitzten Druckplatte geführt wird, wobei es Kontraktionskräften ausgesetzt ist, die ein Schrumpfen des Tuches bewirken. Es war aber nicht vorauszusehen, daß sich dieses Prinzip auf die bereits mustermäßig an einer Seite mit Kunststoff belegten bahnförmigen Unterlagen anwenden läßt.

Es war vielmehr zu befürchten, daß der Kunststoffauftrag diesen Schrumpfvorgang stört oder gar verhindert bzw., daß die hierbei zur Einwirkung kommenden Scher- und Reibungskräfte das aufgebrachte Kunststoffmaterial hierbei auf der Unterlage verschieben oder gar teilweise von der Unterlage ablösen würden. Dies war besonders bei einem punktförmigen Auftragsmuster zu erwarten, bei dem die genau festgelegte Anordnung der relativ zahlreichen und kleinen Punkte von entscheidender Bedeutung für die Brauchbarkeit des Einlagestoffes ist.

Bei der Schrumpfbehandlung soll sich die Unterlage mit dem Kunststoffauftrag auf einer Temperatur befinden, bei der das Kunststoffmaterial plastisch und verformbar ist, damit es auch der Schrumpfbewegung der Unterlage folgen kann und keine Behinderung durch den fixierten Kunststoff eintritt. Geeignete Temperaturen, die durch Heizen der Anpreßwalze erreicht werden können, liegen bei 100 - 140°C je nach verwendetem Kunststoffmaterial, vorzugsweise 120°C bei Polyethylen.

Andererseits soll aber gegebenenfalls durch eine Kühlung der hemmenden Führung, z.B. des verwendeten Bremsschuhs oder des elastischen Bandes, dessen Geschwindigkeit geringer ist als die Umfangsgeschwindigkeit der Anpreßwalze verhindert werden, daß durch die auftretenden Reibungskräfte dort zu hohe Temperaturen erreicht werden.

Vorzugsweise wird nach dem Durchleiten der Unterlage zwischen Anpreßwalze und hemmender Führung die Unterlage in Vibration gebracht, z.B. durch ein Schlagrad. Dies unterstützt den Schrumpfvorgang.

Beim erfindungsgemäßen Verfahren kann es von Vorteil sein, wenn vor der Schrumpfung der Unterlage diese zuvor noch einer Dampfbehandlung, vorzugsweise durch Einwirken von Wasserdampf auf die nicht mit Kunststoff belegte Seite der Bahn, unterworfen wird. Hierdurch werden nicht nur elektrostatische Aufladungen beseitigt, sondern es wird auch die Abnützung der hemmenden Führung vermindert, da bei der Schrumpfmaßnahme, insbesondere dann, wenn man hierbei einen Bremsschuh mit Kautschuk- oder Gummioberfläche oder ein gegenüber der Anpreßwalze langsamer umlaufendes endloses Kautschuk- oder Gummiband verwendet, doch relativ starke Scherkräfte auftreten, die einen beträchtlichen Verschleiß hervorrufen. Die Behandlung der Unterlage mit Wasserdampf bewirkt nun überraschenderweise eine Verminderung dieses Verschleißes, ohne aber die Wirksamkeit der Schrumpfbehandlung zu beeinträchtigen. Die Unterlage kann bei dieser Behandlung so geführt werden, daß ihre beschichtete Seite der gegebenenfalls geriffelten Anpreßwalze oder der hemmenden Führung zugewandt ist.

Es hat sich auch gezeigt, daß die erfindungsgemäß hergestellten heißsiegelfähigen Unterlagen, die im Falle der Verwendung als Einlagestoffe zunächst zu den gewünschten Stücken gestanzt oder geschnitten werden, dabei nicht mehr zum Aufrollen oder Aufkräuseln neigen, sondern glatt liegen bleiben, da die beim Auftragen des Kunststoffs entstandenen latenten inneren Spannungen nun praktisch völlig aufgehoben worden sind.

Gegenstand der Erfindung ist auch eine Vorrichtung zur Durchführung des Verfahrens, die nachfolgend unter Bezugnahme auf die Zeichnungen an einem Beispiel erläutert wird, wobei aus Gründen der Übersichtlichkeit die Zeichnung nicht alle Einrichtungen maßstabsgetreu wiedergeben kann.

Es zeigen:

Fig. 1 eine schematische Seitenansicht einer ersten Ausführungsform der erfindungsgemässen Vorrichtung;

Fig. 2 eine Draufsicht auf eine geriffelte, mit der Stoffbahn umlaufenden Anpresswalze; und

Fig. 3 eine schematische Seitenansicht einer zweiten Ausführungsform der erfindungsgemässen Vorrichtung.

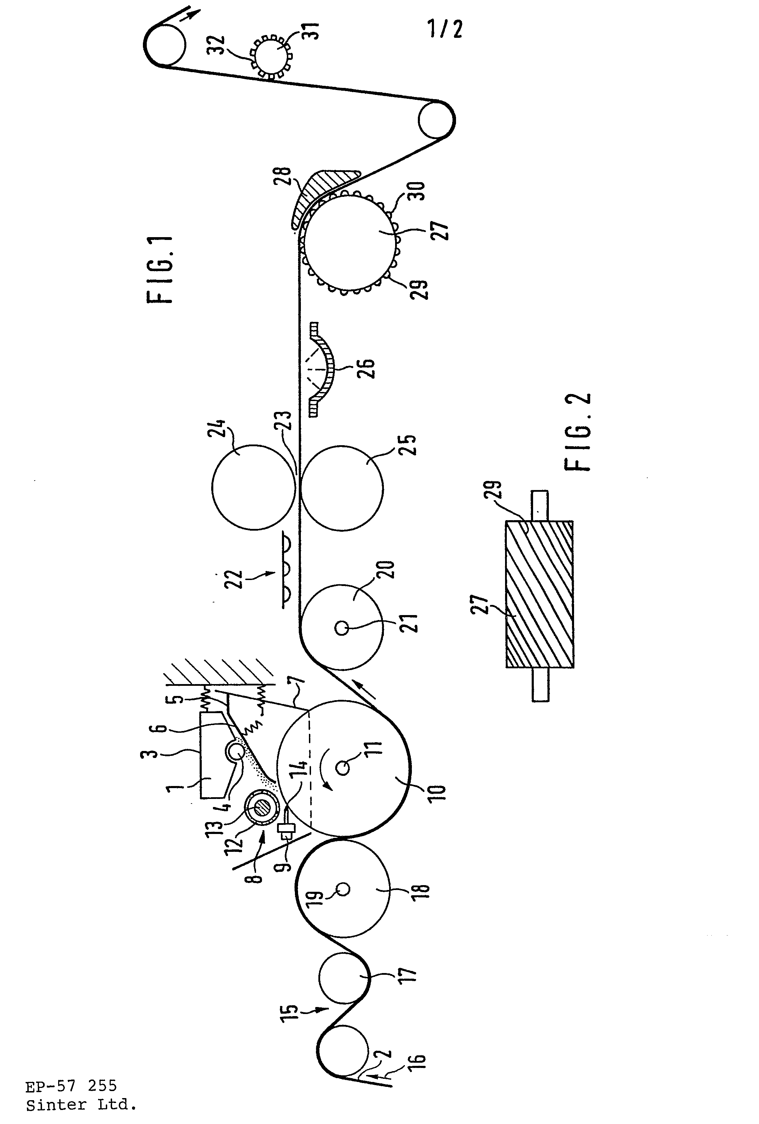

Nach Fig. 1 weist die Vorrichtung einen mit einem Kunstharzpulver als Werkstoff mehr oder weniger aufgefüllten Vorratsbehälter 1 auf, aus dem die bahnförmige endlose Unterlage 2
mit dem Kunstharzpulver beschickt wird. Der Vorratsbehälter 1
kann gegebenenfalls mit einer Vibrationseinrichtung 5 versehen werden, so daß ein eventuelles Zusammenballen des Kunstharzpulvers an einzelnen Stellen im Behälter oder auf dem
Weg zur Unterlage verhindert wird. Über einen Auslauf 3, der
durch eine umlaufende Austragswalze 4 abgeschlossen ist, rieselt das Pulver in gleichmässigem Strom auf ein Leitblech 6
in Form eines losen, aufgelockerten Schleiers. Der behälterabgewandte Teil des Leitbleches 6 befindet sich in einem
Hohlpyramidenstumpf 7, der ausser der Austragswalze 4 die
Walzenrakel 8, die Streichrakel 9 und die obere Hemisphäre
einer Förder- und Verteilungstrommel 10 aufnimmt, die um ihre
Achse 11 oder mit der Achse 11 in Lagern umläuft. Die Umfangsfläche dieser Förder- und Verteilertrommel 10 ist der
gewünschten Musterung entsprechend graviert und räumlich
strukturiert, beispielsweise durch eine Vielzahl hohlwarzen-
oder napfförmiger Ausnehmungen auf ihrer Oberfläche für die
Aufnahme von mehr oder weniger Pulver. Die Trommel 10 ist
zweckmässig auswechselbar, um den jeweils auftretenden Gegebenheiten angepasst werden zu können. Nichtgezeichnete,
an sich bekannte Heiz- und/oder Kühlvorrichtungen ermöglichen
es, die punktgravierte Oberfläche der Trommel 10 auf einem
bestimmten Temperaturgrad zu halten oder diesen willkürlich zu ändern, so dass das locker eingerakelte Kunstharzpulver nicht in den Strukturnestern verklebt. Als zweckmässig erwiesen haben sich im Trommelmantelkörper angeordnete Kanäle, die entweder von einem Kühlmittel oder von einem Heizmittel durchströmt sind. Der Umlaufsinn der Trommel 10 verläuft entgegengesetzt zum Uhrzeigersinn. Der am Leitblech 6 herabrieselnde Pulverschleier gelangt daher zunächst unter den Einfluss der Walzenrakel 8. Diese Walzenrakel trägt einen Mantel 12, der aus Schaumstoff besteht. Der Kern 13 der Walzenrakel kann als Beschwerungsgewicht ausgeführt sein, so dass es unter dem Einfluss der Walzenrakel 8 zur gleichmässigen Auffüllung der Punktgravuren der Oberfläche der Trommel 10 mit dem Pulver kommt. Das Kunstharzpulver kann in die Strukturnester der Fördertrommel 10 sowohl rollend als auch streichend eingerakelt werden, wodurch eine leichte mechanische Verbindung der Pulverkörner eines einzelnen Strukturraumes stattfinden kann. Soweit unvermeidliche Überfüllungen der Gravuren aufgetreten sind, bei der Pulverkörner oder kleinere Ansammlungen über den Trommelumfang überstehen, beseitigt sie der Abstreifer 14 der Streichrakel 9, wobei die wirksame Kante des Abstreifblattes 14 mit einer Mantellinie der Zylinderfläche zusammenfällt, welche die Oberfläche der Trommel 10 bildet, wenn von den Unregelmässigkeiten der Gravur abgesehen wird.

Im Wege der punktweise zu belegenden Unterlage 2 liegt zunächst eine Bewegungsdämmvorrichtung 15, auf welche, in Bahnbewegungsrichtung 16 gesehen, die ballig ausgebildete Streckwalze 17 folgt. In Bewegungsrichtung der Bahn schliesst sich eine beheizte Walze 18 an, die um die Welle 19 umläuft. Die Heizvorrichtungen üblicher Ausbildung, etwa in Form im Trommelmantelkörper angeordneter, von heissem Öl durchströmbarer Kanäle, sind, weil als bekannt vorausgesetzt, nicht dargestellt. Es hat sich als zweckmässig erwiesen, zusätzlich zur Heizwalze 18 eine oder mehrere Vorheizwalzen zu verwenden, gegebenenfalls beidseits der Unterlage. Beispielsweise könnte diese ferner anstelle oder zusätzlich zu bezeizten Walzen unter dem Einfluss von Wärmestrahlern stehen, ohne dass nochmals andere Ausführungsformen der Wärmezuführung ausscheiden. Es kann auch die bereits an der Fördertrommel 10 anliegende Unterlage 2 während der gemeinsamen Förderung einer weiteren Wärmebehandlung durch die Unterlage hindurch unterworfen werden. Die Welle 19 steht entweder unter Federdruck oder die sie stützenden Lager sind so einstellbar angeordnet, dass die Walze 18 die Unterlage 2 mit einer jeweils wählbaren Vorspannung an die Umfangsfläche der punktgravierten Trommel 10 anlegt. Dadurch beginnt die Übertragung der Pulverpartikel von der Oberfläche der punktgravierten Trommel 10 auf die Bahn 2 mit der Verteilung und mit der Schichtstärke, die aufgrund der vorher erörterten und gezeigten Massnahmen verwirklicht werden kann. Die Temperatur der Fördertrommel 10 wird auf einen Wert gebracht, bei welchem die Pulverpartikel praktisch keine Klebewirkung besitzen, die zu einem Ankleben an der Oberfläche der Fördertrommel führen würde, jedoch in Verbindung mit der mechanischen Verfestigung durch das Einrakeln in der Lage sind, der Radialkraft zu widerstehen. In Betracht kommen im allgemeinen zwischen 30°C und 100°C liegende Temperaturen, je nach dem verwendeten Kunstharz. Die hierdurch gegebenen Verhältnisse ändern sich grundsätzlich innerhalb der Berührungszone der Unterlage 2 mit der Fördertrommel 10, da die Walze 18 im vorliegenden Fall auf etwa 200°C aufgeheizt und auf dieser Temperatur gehalten wird. Dadurch wird die Unterlage 2 entsprechend aufgeheizt, so dass die in den Oberflächengravuren der Fördertrommel 10 befindlichen Kunststoffpartikel momentan auf Temperaturen gebracht werden, bei denen sie an ihren der Unterlage 2 zugewandten Begrenzungsflächen stark klebende Eigenschaften entwickeln, während sie jedoch an ihren der Fördertrommel 10 zugewandten Begrenzungsflächen verhältnismässig kühl sind, insbesondere Raum- oder Kühltemperaturen aufweisen, so dass die Rieselfähigkeit des Pulvers erhalten bleibt. Das führt zu einer spiegelbildlichen Übertragung des Kunstharzpulvers auf die Unterlage 2.

Während des Umlaufes der Fördertrommel 10 zusammen mit der
Unterlage 2 wird das Pulver vorübergehend beidseitig abgedeckt und dadurch jegliche auf äussere Einflüsse zurückführbare Zustandsveränderungen der durch die Form der Strukturnester vorgegebenen Pulvermenge ausgeschlossen. Erst
wenn die Unterlage 2 mittels der Walze 20 von der Oberfläche
der Fördertrommel 10 abgelöst wird, fällt dieser Ein- und
Abschluss des Pulvers durch Mantelkörper und Unterlage weg.
Zur weiteren Fixierung kann die Walze 20 ihrerseits beheizt
sein. Soweit überhaupt noch eine weitere Verstärkung der
Fixierung erforderlich ist bzw. einzutreten vermag, sind
in diesem Ausführungsbeispiel ausserdem noch Infrarotheizungen 22 für eine ergänzende Nachplastifizierung und Sinterung vorgesehen. Danach tritt die Unterlage in einen Einführungsspalt 23 zwischen einer Kalanderwalze 24 und einer gegebenenfalls schwenkbar angeordneten Walze 25 ein, wird anschliessend einer Dampfbehandlung, vorzugsweise durch Einwirken von erhitztem, aus einem längs des Weges der belegten Unterlage 2 angeordneten Dämpfsystems 26 ausströmenden
Wasserdampf auf die nicht belegte Seite der Unterlage unterworfen, um dann zwischen einer mit der Stoffbahn umlaufenden Anpresswalze 27 und einer gegen die Anpresswalze anliegenden hemmenden Führung, die als Bremsschuh 28 ausgebildet
ist, hindurchgeführt zu werden, wobei der Bremsschuh 28
auf die nichtbeschichtete Seite der Textilbahn eine Bremswirkung ausübt. Die hemmende Führung weist an ihrer Berührungsfläche mit der Unterlage eine Kautschuk- oder Gummiauflage auf. Die auf den Stoff aufgebrachten Kunststoffteilchen sind zu einem gewissen Grade noch plastisch bzw. können gegebenenfalls durch Beheizen der Walze 27 wieder plastisch gemacht werden. Durch diese Massnahmen wird erfindungsgemäss erreicht, dass noch vor dem Erstarren des Kunstharzpulvers die belegte Unterlage 2 sich von dem durch mechanische Beanspruchung und dem Einfluss erhöhter Temperaturen
sich ergebenden gedehnten Zustand in einen nicht gedehnten
Zustand relaxieren kann, so dass ein Verdichten und
Schrumpfen der belegten Unterlage 2 erfolgt,

: 57 255

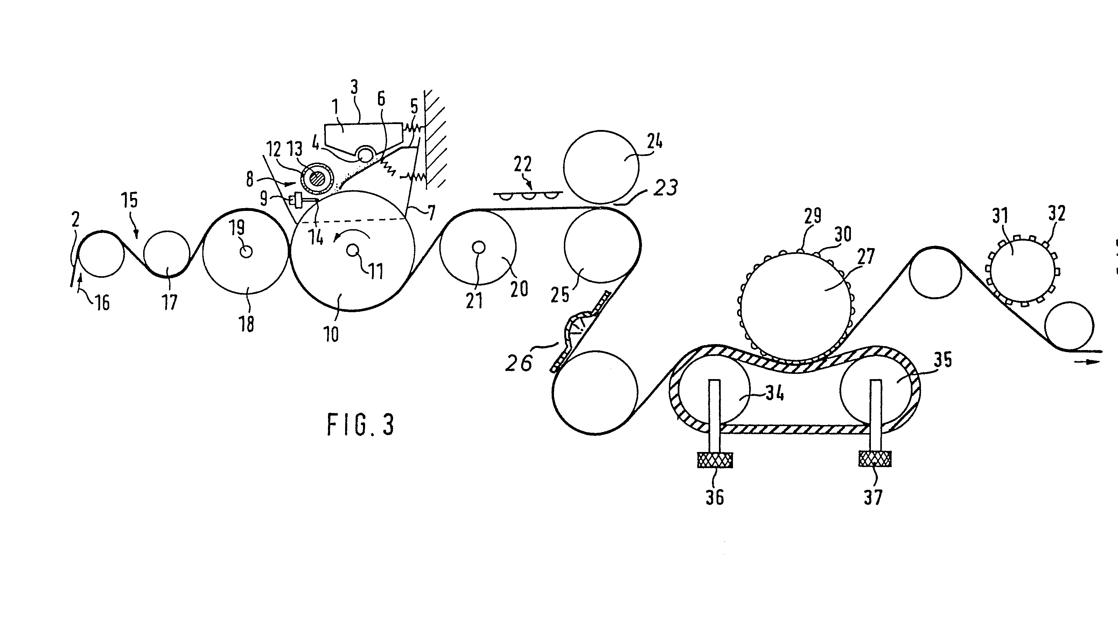

ohne dass dabei das aufgetragene Kunststoffmaterial auf der Unterlage verschoben oder sogar von ihr abgelöst wird. Die Walze 27 weist an ihrem Umfang eine sich im wesentlichen axial erstreckende Riffelung 29 auf, deren Längsachsen gegenüber der Längsachse der Walze 27 geneigt sind, wie Fig.2 zeigt. Die Scheitel 30 dieser Riffelungen sind abgerundet.

Die Unterlage 2 wird mittels einem der Anpresswalze 27 nachgeordneten Schlagrad 31, bestehend aus einer Walze mit radialen Vorsprüngen 32, in Vibrationen versetzt. Diese Vibrationen unterstützen die saubere Ablösung der Unterlage 2 von der Walze 27 und dienen insbesondere einer gleichmässigen Relaxierung der Unterlage zu einem nicht gedehnten Zustand. In der Folge wird die Unterlage über Führungswalzen der Anlage entnommen.

Bei der in Fig. 3 dargestellten Ausführungsform ist als hemmende Führung anstelle des Bremsschuhs 28 ein elastisches Band 33 vorgesehen, welches über Spannrollen 34,35 geführt ist. Diese Spannrollen sind mittels diagonaler Vorspannungseinrichtungen 36,37 einstellbar, wobei beispielsweise zur Feineinstellung Mikroschrauben vorgesehen sein können. Dieses Band 33 kann ein nicht allzu weiches Gummiband sein, und es können Einrichtungen vorgesehen sein, um dieses Band zu kühlen. Zum Kühlen des Bandes kann beispielsweise ein Kühlbalken eingebaut sein oder es kann mittels Blasluft gekühlt werden.

Die Temperatur des elastischen Bandes 33 wird zweckmässig auf 60 bis 75°C eingestellt, während die Temperatur der beheizten Walze 27 (wobei vorzugsweise Dorn und Walze ölbeheizt sind) auf 80 bis 92°C gesteuert werden kann. Bei der genannten Einstellung der Temperatur des Bandes ergibt sich zusammen mit der Walkhitze das optimale Arbeitsverhalten bei den jetzt üblichen Unterlagen bei einer Bandgeschwindigkeit von 30 bis 50 m/min. Die Bandgeschwindigkeiten können jedoch zwischen 10 und 100 m/min. liegen und sind stets niedriger einzustellen als die Umlaufgeschwindigkeit der Anpresswalze 2

Die Riffelung 29 der Walze 27 ist im Einzelfall der zu behandelnden Unterlage 2 und der Verteilung und Stärke der Beschichtung anzupassen. Bei ausserordentlich fein verteilter Beschichtung kann das vorgeschlagene Verfahren mit einer Walze, die keine Riffelung aufweist, durchgeführt werden.

Die Unterlage 2 wird in der Regel so geführt, dass die beschichtete Seite der Walze 27 zugewandt ist. Bei einer gewissen Dichte der Beschichtung kann es aber auch vorteilhaft sein, die Unterlage so zu führen, dass ihre unbeschichtete Seite der Walze zugewandt ist.

Im Wesen des vorgeschlagenen Verfahrens liegt die Möglichkeit der Verwirklichung mannigfacher weiterer Vorteile. So besteht die weitere Möglichkeit, der Unterlage in unmittelbarem Anschluss an die Durchführung des vorgeschlagenen Verfahrens eine weitere Bahn zuzuführen und mit der beschichteten Unterlage zu verkleben. Es ist weiter möglich, die Unterlage auf beiden Seiten mit Kunststoff zu beschichten und dann als beidseits klebenden Einlagestoff zwischen zwei weiteren Bahnen zu verwenden.

Wenn es aus räumlichen oder anderen fabrikatorischen Gründen notwendig ist, kann der Bearbeitungsvorgang nach der Nachplastifizierung, vor den Kalanderwalzen, oder aber auch nach den Kalanderwalzen, unterbrochen werden.

029

PATENTANWÄLTE

## WUESTHOFF - v. PECHMANN - BEHRENS - GOETZ

EUROPEAN PATENT ATTORNEYS

DR.-ING. FRANZ WUESTHOFF
DR. PHIL. FRED 0097957 1956)
DIPL.-ING. GERHARD PULS (1952-1971)
DIPL.-CHEM. DR. E. FREIHERR VON PECHMANN
DR.-ING. DIETER BEHRENS
DIPL.-ING.; DIPL.-WIRTSCH.-ING. RUPERT GOETZ

D-8000 MÜNCHEN 90
SCHWEIGERSTRASSE 2

TELEFON: (089) 66 20 51
TELEGRAMM: PROTECTPATENT
TELEX: 5 24 070

EP-57 255

Sinter Limited,
Bristol, England

P a t e n t a n s p r ü c h e

1.    Verfahren zur Herstellung von kunststoffbeschichteten bahnförmigen Unterlagen durch Auftragen eines Kunststoffs mittels einer mustermäßige Vertiefungen aufweisenden Förderfläche auf eine erhitzte Unterlage nach dem Tiefdruckverfahren, wobei das Kunstharz in Pulverform auf die Förderfläche aufgebracht wird, die eine Temperatur aufweist, bei der die Rieselfähigkeit des Pulvers noch erhalten bleibt und ein Ankleben an der Förderfläche vermieden wird, während die Unterlage auf eine Temperatur erhitzt wird, bei der das Kunstharz erweicht und klebrig wird,
dadurch   g e k e n n z e i c h n e t ,
daß die beschichtete Unterlage vor ihrer Abkühlung oder gegebenenfalls nach Wiedererwärmung zwischen einer umlaufenden Anpreßwalze und einer ihre Bewegung um die Walze herum hemmenden Führung so hindurchgeführt wird, daß ein Verdichten und Schrumpfen der Unterlage und Kunststoffbeschichtung eintritt.

2.    Verfahren nach Anspruch 1,
dadurch   g e k e n n z e i c h n e t ,
daß die beschichtete Unterlage vor dem Verdichten und Schrumpfen mit Wasserdampf behandelt wird.

/2

3.    Verfahren nach Anspruch 1 oder 2,

dadurch  g e k e n n z e i c h n e t ,

daß eine beheizte Anpreßwalze verwendet wird.


4.    Verfahren nach einem der Ansprüche 1 bis 3,

dadurch  g e k e n n z e i c h n e t ,

daß die beschichtete Unterlage nach Durchführung zwischen Anpreßwalze und hemmender Führung in Vibration versetzt wird.


5.    Vorrichtung zur Durchführung des Verfahrens nach einem der Ansprüche 1 bis 4 mit einer Einrichtung zum Zuführen eines Kunstharzpulvers auf eine an ihr vorbeibewegbare, heiz- oder kühlbare Förderfläche,       deren Oberfläche mustermäßig angeordnete Vertiefungen für die Aufnahme des Kunstharzpulvers aufweist, einer eine zu beschichtende Unterlage      erhitzende und der Fördertrommel

     zuführende heizbaren Walze,

g e k e n n z e i c h n e t  durch

ein  der Fördertrommel (10) nachgeordnetes Kalanderwalzenpaar (24, 25), einem sich daran anschließenden Dämpfsystem (26) zum Beaufschlagen der nicht kunststoffbeschichteten Seite der Unterlage (2) mit heißem Wasserdampf, sowie einer in Bewegungsrichtung der Bahn nachfolgend angeordneten und mit der Unterlage (2) umlaufenden Anpreßwalze (27) und einer an diese anlegbare, die Bewegung der Unterlage (2) um die Anpreßwalze (27) hemmenden Führung.


6.    Vorrichtung nach Anspruch 5,

dadurch  g e k e n n z e i c h n e t ,

dass die hemmende Führung als ein gegen die Anpresswalze (27) anliegender kühlbarer Bremsschuh (28) ausgebildet ist.

7.   Vorrichtung nach Anspruch 5,
dadurch   g e k e n n z e i c h n e t ,
dass die hemmende Führung/ein über Rollen (34,35) geführtes, an die Anpresswalze (27) anliegendes elastisches
Band (33) ausgebildet ist, das relativ zur Anpresswalze (27) mit kleinerer Geschwindigkeit umläuft.

8.   Vorrichtung nach einem der Ansprüche 5 bis 7,
dadurch   g e k e n n z e i c h n e t ,
dass Kühleinrichtungen für die die Bewegung der Unterlage (2) hemmende Führung vorgesehen sind.

9.   Vorrichtung nach einem der Ansprüche 5 bis 8,
dadurch   g e k e n n z e i c h n e t ,
dass die Anpresswalze (27) an ihrer Umfangsfläche eine
im wesentlichen axial verlaufende Riffelung (29) aufweist.

10.   Vorrichtung nach Anspruch 9,
dadurch   g e k e n n z e i c h n e t ,
dass die Längsachsen der Riffelung (29) gegenüber der
Längsachse der Anpresswalze (27) geneigt sind.

11.   Vorrichtung nach Anspruch 9 oder 10,
dadurch   g e k e n n z e i c h n e t ,
dass die Riffelung (29) abgerundete Scheitel (30) aufweist.

12.   Vorrichtung nach Anspruch 5,
dadurch   g e k e n n z e i c h n e t ,
dass die Anpresswalze (27) eine glatte Oberfläche aufweist.

13.     Vorrichtung nach einem der Ansprüche 5 bis 12,
dadurch  g e k e n n z e i c h n e t ,
daß eine als Schlagrad (31) ausgebildete und radiale Vorsprünge (32) aufweisende Walze zur Vibration der beschichteten Unterlage (2) der hemmenden Führung nachgeordnet
ist.

14.     Vorrichtung nach Anspruch 5,
dadurch  g e k e n n z e i c h n e t ,
daß der Förderfläche (10) eine Abnahmewalze (20) zugeordnet ist, über die die Unterlage von der Förderfläche (10)
umgelenkt und abgenommen wird.

15.     Vorrichtung nach Anspruch 14,
dadurch  g e k e n n z e i c h n e t ,
daß die Abnahmewalze (20) heizbar ausgebildet ist.

6028

FIG.1

FIG.2

FIG. 3

Europäisches
Patentamt

**EUROPÄISCHER RECHERCHENBERICHT**

## EINSCHLÄGIGE DOKUMENTE

EP 83106290.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | <u>AT - B - 325 005</u> (SALADIN BENNO) <br> * Seite 5; Ansprüche 1,2; Fig.* <br> -- | 1 | D 06 C 21/00 <br> D 06 B 1/16 <br> D 06 B 19/00 |
| D,A | <u>DE - C3 - 2 238 230</u> (HUNT & MOS-CROP) <br> * Linke Spalte, Zeilen 42-55; Fig. 1,2 * <br> -- | 1,5,7 | B 05 D 1/28 |
| D,A | <u>DE - A1 - 3 002 337</u> (HUNT & MOS-CROP) <br> * Seite 4, Zeilen 11-18; Seite 8, Zeilen 7-25; Ansprüche 1, 3; Fig. 1 * <br> ---- | 1,2,5, 7 | |

| RECHERCHIERTE SACHGEBIETE (Int. Cl. ³) |
|---|
| B 05 D |
| B 05 C |
| D 06 B |
| D 06 C |
| D 06 N |
| D 06 M |

Der vorliegende Recherchenbericht wurde für alle Patentansprüche erstellt.

| Recherchenort | Abschlußdatum der Recherche | Prüfer |
|---|---|---|
| WIEN | 05-09-1983 | KAHOVEC |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82